# EUROPÄISCHE PATENTSCHRIFT

(11) **EP 1 003 671 B1**
(45) Veröffentlichungstag und Bekanntmachung des Hinweises auf die Patenterteilung: **11.04.2001**
(21) Anmeldenummer: 98946345.0
(22) Anmeldetag: 17.08.1998
(51) Int. Cl.: B64C 27/12, F16H 1/22

(54) **GETRIEBE MIT LEISTUNGSVERZWEIGUNG, INSBESONDERE FÜR EINEN HUBSCHRAUBER-ROTOR-ANTRIEB**
GEARBOX WITH TORQUE DIVISION, IN PARTICULAR FOR A HELICOPTER ROTOR DRIVE
TRANSMISSION A DERIVATION DE PUISSANCE, NOTAMMENT POUR ENTRAINEMENT DE ROTOR D'HELICOPTERE

(30) Priorität: 22.08.1997 DE 19736572
(43) Veröffentlichungstag der Anmeldung: 31.05.2000
(73) Patentinhaber: ZF Luftfahrttechnik GmbH, 34379 Calden (DE)
(72) Erfinder: FISCHER, Manfred, D-88677 Markdorf (DE); HUNOLD, Bernard, D-88046 Friedrichshafen (DE); HÄSE, Hans, D-88045 Friedrichshafen (DE); MESSMER, Martin, D-88048 Friedrichshafen (DE)
(74) Vertreter: Zietlow, Karl-Peter
(86) Internationale Anmeldenummer: EP9805183
(87) Internationale Veröffentlichungsnummer: WO9910236

(56) Entgegenhaltungen:
- WO-A-97/22817
- DE-A- 3 423 983
- GB-A- 1 310 417
- GB-A- 1 393 984
- US-A- 5 135 442

## Beschreibung

Die Erfindung betrifft ein Getriebe mit Leistungsverzweigung für einen Hubschrauber-Rotor-Antrieb nach dem Oberbegriff von Anspruch 1. Ein derartiges Getriebe ist aus GB-A-1 393 984 bekannt.

Derartige Getriebe weisen den Vorteil auf, daß die zu übertragende Leistung auf mehrere parallel wirkende Zahneingriffe verteilt ist, so daß die Verzahnungskräfte pro Zahneingriff verringert werden, und insgesamt eine höhere Leistungsdichte erzielt werden kann, als bei Getrieben ohne Leistungsverzweigung.

Die übertragbare Leistung bei Getrieben ohne Leistungsverzweigung durch eine größere Verzahnungsbreite zu erhöhen, ist nur in einem begrenzten Umfang möglich. Bei Stirnrädern tritt die Gefahr des Kantentragens, verursacht durch Gehäuseverformungen oder Fertigungsungenauigkeiten auf. Bei breiten Kegelrädern oder Kronrädern treten Probleme mit der Zahnform auf, Spiralkegelräder sind ab einer bestimmten Zahnbreite nur mit erheblichem Aufwand bzw. nicht mehr zu fertigen.

In der US 5 135 442 ist ein Winkelgetriebe mit Leistungsverzweigung offenbart, bei dem die Leistung eines Antriebsritzel auf zwei beidseitig des Ritzels gegenüberliegend angeordneten Tellerräder aufgeteilt wird. Jedes der Tellerräder ist über eine Welle drehfest mit einem weiteren Ritzel verbunden. Die weiteren Ritzel sind in gleichzeitigem Zahneingriff mit einem Sammelrad. Nachteilig bei dieser Lösung ist die sehr hohe Teilezahl. Für höhere einstufige Übersetzungen in der verzweigten Stufe wäre ein größerer Achsabstand der Wellen und ein entsprechend größerer Bauraum erforderlich.

GB-A-1 310 417 zeigt ein Getriebe, das sämtliche Merkmale des Anspruchs 1 aufweist, außer, daß das Verhältnis der Torsionssteifigkeiten der Ritzelwellen in etwa dem Wälzradienverhältnis der zugeordneten Antriebsritzel entspricht.

Der Erfindung liegt die Aufgabe zugrunde, ein Getriebe mit Leistungsverzweigung zu schaffen, das auf kleinem Bauraum, mit geringem Gewicht und mit einer kleinen Anzahl von Funktionselementen eine hohe Übersetzung sowie eine hohe Leistungsdichte zuläßt.

Erfindungsgemäß wird diese Aufgabe mit einem Getriebe gemäß Anspruch 1 gelöst.

Die koaxiale Anordnung ist sehr vorteilhaft in bezug auf Teilezahl und Bauraumausnutzung.

Im Drehmomentenfluß ist jedes der Leistungszweige ein drehelastisches Glied angeordnet. Hierdurch kann die Leistungsbzw. Momentenaufteilung auf die beiden Leistungszweige definiert beeinflußt werden, und es wird eine Unempfindlichkeit gegenüber Verformungen erzielt, die im Betrieb beispielsweise durch statische oder thermische Belastungen erzeugt werden können.

Das Verhältnis der Torsionssteifigkeiten der drehelastischen Glieder entspricht in etwa dem Wälzradienverhältnis der zugeordneten Antriebsritzel (das gleiche Verhältnis gilt auch bei den abtriebsseitigen Zahnrädern); damit ist die Höhe der Tangentialkräfte in den Zahneingriffen der Leistungszweige in etwa gleich, so daß bei gleichen Verzahnungsbreiten eine gleichmäßige Belastung der Verzahnungen erzielt wird. Der Begriff Torsionssteifigkeit wird in diesem Zusammenhang verstanden als Maß für das Moment, mit dem das betreffende Bauteil einer Verdrehung um einen bestimmten Winkel entgegenwirkt.

Eine kompakte Anordnung wird dadurch erzielt, dass die drehelastischen Glieder zwischen einem antriebsseitigen Verzweigungspunkt und den Antriebsritzeln ineinander angeordnete koaxiale Ritzelwellen sind, welche torsionsweich ausgebildet sind, wobei es vorteilhaft ist, wenn das Antriebsritzel der radial äußeren Ritzelwelle auf der radial inneren Ritzelwelle verdrehbar gelagert ist.

Am Verzweigungspunkt sind die Ritzelwellen vorzugsweise durch ein Formschlußprofil - beispielsweise ein Zahnwellenprofil - drehfest miteinander gekoppelt. Zwischen dem Verzweigungspunkt und den Ritzelverzahnungen liegen in einer vorteilhaften Ausgestaltung torsionsweiche Abschnitte, so daß die Ritzel unter Belastung um einen lastabhängigen Winkel gegeneinander verdrehbar sind.

Eine sehr einfache, hochbelastbare und zuverlässige verdrehbare Lagerung des Antriebsritzels der radial äußeren Ritzelwelle auf der radial inneren Ritzelwelle wird erzielt, wenn die Lagerung als Gleitlager ausgebildet ist, wobei die Lagerlaufbahnen in das Antriebsritzel bzw. die Ritzelwelle eingearbeitet sind. Durch eine Buntmetallbeschichtung der Lagerlaufbahnen lassen sich die Lagereigenschaften in vorteilhafter Weise beeinflussen.

Ein dünnwandiger Hohlwellenabschnitt ist eine vorteilhafte Ausgestaltung eines torsionsweichen Wellenabschnitts, bei dem die Spannungen gegenüber alternativen Ausgestaltungen minimal sind. Insbesondere bei der radial äußeren Ritzelwelle muß die Wandstärke klein gewählt werden, um Torsionsweichheit zu erzielen. Das polare Flächenträgheitsmoment des Querschnitts der radial inneren Welle ist aufgrund der starken Abhängigkeit vom Radius ohnehin wesentlich kleiner.

Eine alternative Ausgestaltung eines torsionsweichen Wellenabschnitts weist beispielsweise längsgerichtete Ausnehmungen auf. In anderen Fällen kann es vorteilhaft sein, die äußere Ritzelwelle aus einem Material mit kleinerem Schubmodul, wie beispielsweise Titan, herzustellen.

Für die Einstellung der Lastanteile der Leistungszweige ist es vorteilhaft, wenn die relative Drehstellung der Ritzelwellen mindestens einmalig einstellbar ist. Die Einstellbarkeit kann beispielsweise dadurch erzielt werden, daß am Verzweigungspunkt ein schrägverzahntes Zahnwellenprofil vorgesehen ist, und die axiale Stellung der beiden Ritzelwellen mittels Einstellscheiben justierbar ist. Ebenso sind aber auch Klebe- oder reibschlüssige Preßverbindungen am Verzweigungspunkt oder zwischen Ritzelwelle und Ritzel möglich, so daß die Drehstellung bei der Montage einmalig einstellbar ist.

In bezug auf die Teilezahl ist eine Ausgestaltung vorteilhaft, bei der mindestens eines der Antriebsritzel mit der Ritzelwelle einstückig ausgebildet ist.

Das erfindungsgemäße Getriebe kann in mehreren vorteilhaften Konstellationen verwendet werden:

Eine Ausführungsform, bei der die abtriebsseitigen Zahnräder als zylindrische Stirnräder ausgebildet sind, eignet sich vorteilhaft für eine parallele Anordnung von An- und Abtrieb dieser Getriebestufe.

Wenn die abtriebsseitigen Zahnräder als Kegelräder ausgebildet sind, lassen sich die verschiedensten Winkel zwischen An- und Abtrieb des Getriebes erzielen.

Wenn die abtriebsseitigen Zahnräder als Kronräder ausgebildet sind und die zylindrischen Antriebsritzel rechtwinklig dazu angeordnet sind, wirken sich axiale Verschiebungen der Antriebsritzel nicht auf das radiale Verzahnungsspiel aus.

Mit als Kegelräder ausgebildeten Antriebsritzeln läßt sich das Verzahnungsspiel durch Einstellung der axialen Stellung z. B. mittels Einstellscheiben justieren. In Kombination mit ebenfalls kegelig ausgebildeten abtriebsseitigen Zahnrädern lassen sich - wie beschrieben - verschiedenste Winkel zwischen An- und Abtrieb des Getriebes realisieren, wobei die Verlängerungen der Achsen normalerweise einen gemeinsamen Schnittpunkt aufweisen.

In anderen Einbaufällen ist ein Achsversatz wünschenswert, der dadurch ermöglicht wird, wenn die Antriebsritzel und die abtriebsseitigen Zahnräder Hypoidradpaare bilden.

Die bekannten Vorteile einer Schrägverzahnung oder einer Spiralverzahnung sind ein höherer Überdeckungsgrad und geringere Verzahnungsgeräusche. Durch axiale Verschiebung eines schrägverzahnten Ritzels entlang seiner Drehachse läßt sich in vorteilhafter Weise der Lastanteil des betreffenden Leistungszweiges beeinflussen.

Vorteilhaft ist, wenn die Schrägungswinkel der Radpaare der Leistungszweige entgegengesetzten Richtungssinn aufweisen. Auf diese Weise findet ein Axialkraftausgleich statt, so daß ein kleineres Axiallager ausreichend ist. Sind die Ritzelwellen axial zueinander fixiert, jedoch als Einheit gegenüber den abtriebsseitigen Zahnrädern mit axialem Spiel gelagert, tritt abhängig von den Schrägungswinkeln ein leistungsaufteilender Effekt auf.

In bezug auf eine einfachere Montage ist es vorteilhaft, wenn die Schrägungswinkel der Radpaare der Leistungszweige gleichen Richtungssinn aufweisen.

Aus kinematischen Gründen ist es erforderlich, daß die Übersetzungen der Leistungszweige exakt gleich sind. Besonders einfache Montagebedingungen werden erzielt, wenn die Antriebsritzel und die abtriebsseitigen Zahnräder der Leistungszweige jeweils gleiche Zähnezahlen aufweisen. Wenn die verschiedenen Leistungszweige verschiedene Wälzradien aufweisen, ist es vorteilhaft, wenn das Verhältnis der Moduln der Verzahnungen in etwa dem (Wälz-)radienverhältnis entspricht. Auf diese Weise werden günstige Zahnformen ermöglicht.

Für höhere Gesamtübersetzungen ist es vorteilhaft, wenn antriebsseitig eine Vorübersetzungsstufe vorgesehen ist.

Schließlich ist es vorteilhaft, wenn ein Ritzel eines Nebenabtriebs mit einem der abtriebsseitigen Zahnräder in ständigem Zahneingriff ist. Durch dieses Ritzel ist eine ständige triebliche Verbindung des Heckrotorantriebs mit dem Hauptrotor hergestellt.

Anhand der beiliegenden Zeichnungen wird die Erfindung näher erläutert, wobei
- Fig. 1: eine perspektivische Ansicht von Teilen eines erfindungsgemäßen Getriebes;
- Fig. 2: einen Längsschnitt durch ein erfindungsgemäßes Getriebe mit kegeligen Zahnrädern;
- Fig. 3: einen Längsschnitt durch ein erfindungsgemäßes Getriebe mit zylindrischen Zahnrädern und
- Fig. 4: eine Darstellung eines Hubschrauber-Rotor-Antriebs für zwei Antriebsmaschinen zeigen.

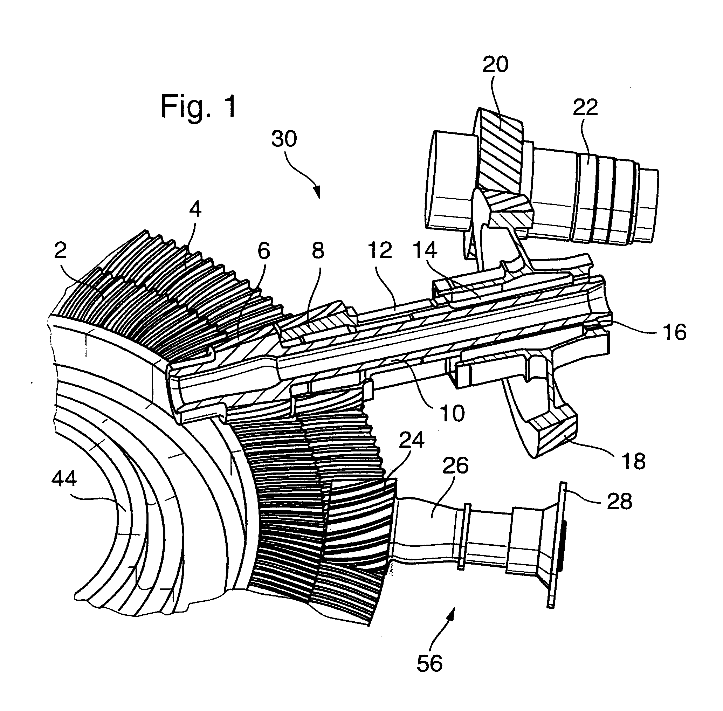

Fig. 1 zeigt Teile eines erfindungsgemäßen Getriebes in perspektivischer Ansicht. Die beiden abtriebsseitigen Zahnräder 2, 4 sind drehfest miteinander und mit dem Rotormast 44, um dessen Achse sie drehbar gelagert sind, verbunden. Das Antriebsritzel 6 eines ersten Leistungszweiges ist in ständigem Zahneingriff mit dem abtriebsseitigen Zahnrad 2. Koaxial zu diesem ist ein Antriebsritzel 8 eines zweiten Leistungszweiges angeordnet, welches in ständigem Zahneingriff mit dem abtriebsseitigen Zahnrad 4 ist.

Die als Hohlwellen ausgebildeten Ritzelwellen 10, 12 sind koaxial ineinander angeordnet und lediglich an dem antriebsseitigen Verzweigungspunkt 16 drehfest miteinander gekoppelt. In dem Bereich zwischen dem Verzweigungspunkt 16 und den Zahneingriffen der Ritzel 6, 8 mit den abtriebsseitigen Zahnrädern 2, 4 weisen die Ritzelwellen 10, 12 eine bestimmte Drehelastizität auf. Die radial äußere Ritzelwelle 12 weist hierzu einen relativ dünnwandigen Bereich 14 auf. Die radial innere Ritzelwelle 10 ist etwas länger und weist einen kleineren Radius auf, so daß sie auch ohne speziellen dünnwandigen Bereich bereits die gewünschte Drehelastizität aufweist. Die Drehelastizitäten der beiden Wellen 10, 12 sind so bemessen, daß beim dargestellten Getriebe unter voller Belastung eine Verdrehung um jeweils etwa 0,4° erfolgt.

Das Verhältnis der Torsionssteifigkeiten der drehelastischen Glieder - hier die Ritzelwellen - entspricht etwa dem Wälzradienverhältnis der zugeordneten Antriebsritzel 6, 8, so daß eine gleichmäßige Verzahnungsbelastung erzielt wird. Die Räder 2, 4, 6, 8 in der dargestellten Ausführungsform sind spiralverzahnt, wobei die Räder der beiden Leistungszweige gleichen Richtungssinn bzw. Richtungssinn des Schrägungswinkels aufweisen. Die Ritzel 6, 8 und die abtriebsseitigen Zahnräder 2, 4 weisen jeweils gleiche Zähnezahlen auf, wobei das Verhältnis der Moduln in etwa dem Wälzradienverhältnis entspricht. Die Zahngeometrie der Verzahnungen der beiden Leistungszweige ist in vorteilhafter Weise getrennt voneinander optimierbar.

In Fig. 1 ist ferner eine Vorübersetzungsstufe, gebildet aus den Kegelrädern 18 und 20, dargestellt, wobei das Rad 18 am Verzweigungspunkt 16 drehfest mit den beiden Ritzelwellen gekoppelt ist und das Rad 20 durch die Welle 22 mit dem nicht dargestellten Antrieb verbindbar ist. Das Ritzel 24 eines zum Heckrotor führenden Nebenabtriebs 56 ist in ständigem Zahneingriff mit dem abtriebsseitigen Zahnrad 4. Über die Welle 26 und den Flansch 28 ist eine ständige triebliche Verbindung von Hauptrotor und Heckrotor herstellbar.

In vorteilhafter Weise ist der Nebenabtrieb 24, 26, 28 unabhängig vom antriebsseitigen Getriebe 30 als separates Modul mit einem eigenen nicht dargestellten Gehäuse ausgebildet, wodurch eine leichte Anpaßbarkeit an verschiedene Einbauverhältnisse erzielt wird.

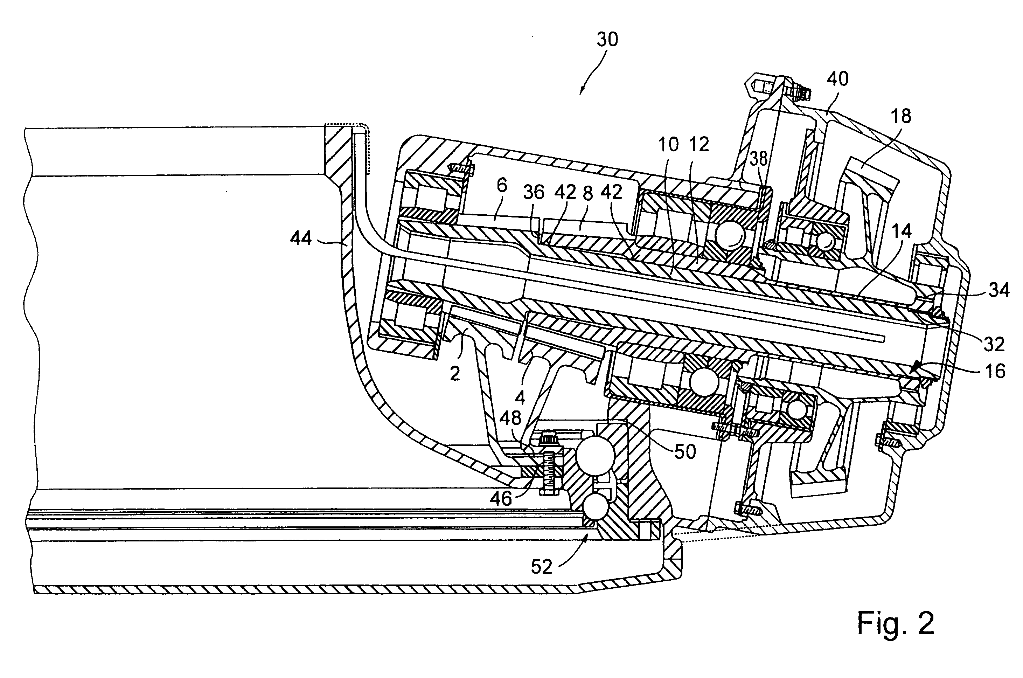

In Fig. 2 sind der Fig. 1 entsprechende Teile mit den gleichen Bezugszeichen versehen. Im Verzweigungspunkt 16 sind die beiden Ritzelwellen 10, 12 durch eine Zahnwellenverbindung 32 formschlüssig und drehspielfrei miteinander verbunden. Die Momentenübertragung vom Kegelrad 18 auf die beiden Ritzelwellen 10, 12 erfolgt ebenfalls durch eine Zahnwellenverbindung 34, welche im selben axialen Bereich wie die Zahnwellenverbindung 32 angeordnet ist. Die Zahnwellenverbindungen 32, 34 lassen eine axiale Verschiebung der drehfest verbundenen Teile zu, Einstellscheiben 36, 38 dienen zur Festlegung der axialen Positionen der beiden Ritzel 6, 8 zueinander und gegenüber dem Gehäuse 40, welches aus Leichtmetall oder gewichtssparend aus Faserverbundwerkstoff hergestellt ist.

Unter Last sind die beiden Ritzel 6, 8, bedingt durch die Drehelastizität der Ritzelwellen 10, 12, gegeneinander verdrehbar. Das radial äußere Ritzel 8 ist in der dargestellten Ausführungsform auf der radial inneren Ritzelwelle 10 verdrehbar gelagert. Zwischen Ritzel 8 und Welle 10 sind Paßflächen vorgesehen, welche zur Verbesserung der Lagereigenschaften an ihrer Oberfläche mit einer Buntmetallschicht versehen sein können. Die hierdurch gebildete Gleitlagerung, bei der die Lagerlaufbahnen 42 in das Antriebsritzel bzw. die Ritzelwelle eingearbeitet sind, weist sich durch ihre geringe Teilezahl, ihre Spielfreiheit und ihre hohe Belastbarkeit aus.

In der dargestellten Ausführungsform sind sowohl die Antriebsritzel 6, 8 als auch die abtriebsseitigen Zahnräder 2, 4 als Kegelräder ausgebildet, wodurch sich ein gewünschter Winkel zwischen An- und Abtrieb erzielen läßt. Zur Verringerung der Teilezahl sind die Ritzel 6, 8 mit den Ritzelwellen 10, 12 jeweils einstückig ausgebildet.

Die beiden abtriebsseitigen Zahnräder 2, 4 sind mittels Befestigungselementen 46 drehfest mit dem Rotormast 44 verbunden. Einstellscheiben 48, 50 ermöglichen die Einstellung der vertikalen Position der Räder 2, 4 zueinander und die Einstellung der vertikalen Position des Getriebes 30 zum Rotorlager 52 bzw. Rotormast 44.

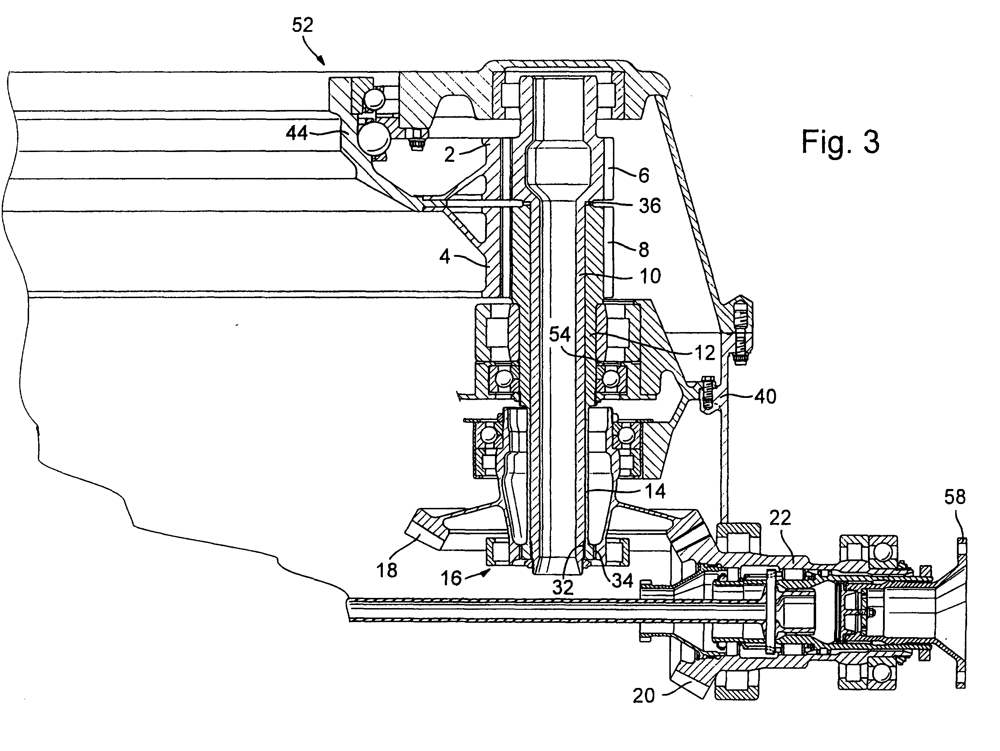

Fig. 3 zeigt eine weitere Ausführungsform eines erfindungsgemäßen Getriebes, bei dem sowohl die abtriebsseitigen Zahnräder 2, 4 als auch die Antriebsritzel 6, 8 als zylindrische Stirnräder ausgebildet sind und die Drehachse der Ritzel parallel zur Drehachse der abtriebsseitigen Zahnräder ist. Einander entsprechende Teile sind wiederum mit gleichen Bezugszeichen versehen. Vorteilhaft bei dieser Anordnung ist, daß das Radialspiel der Verzahnungen zwischen den Rädern 2, 6 bzw. 4, 8 unabhängig von der axialen Position der beiden Ritzel 6, 8 ist. Die Räder sind schrägverzahnt, so daß die Einstellung der axialen Position der Ritzel 6, 8 mittels der Einstellscheiben 36, 54 zur Einstellung der Lastanteile der einzelnen Leistungszweige verwendet werden kann.

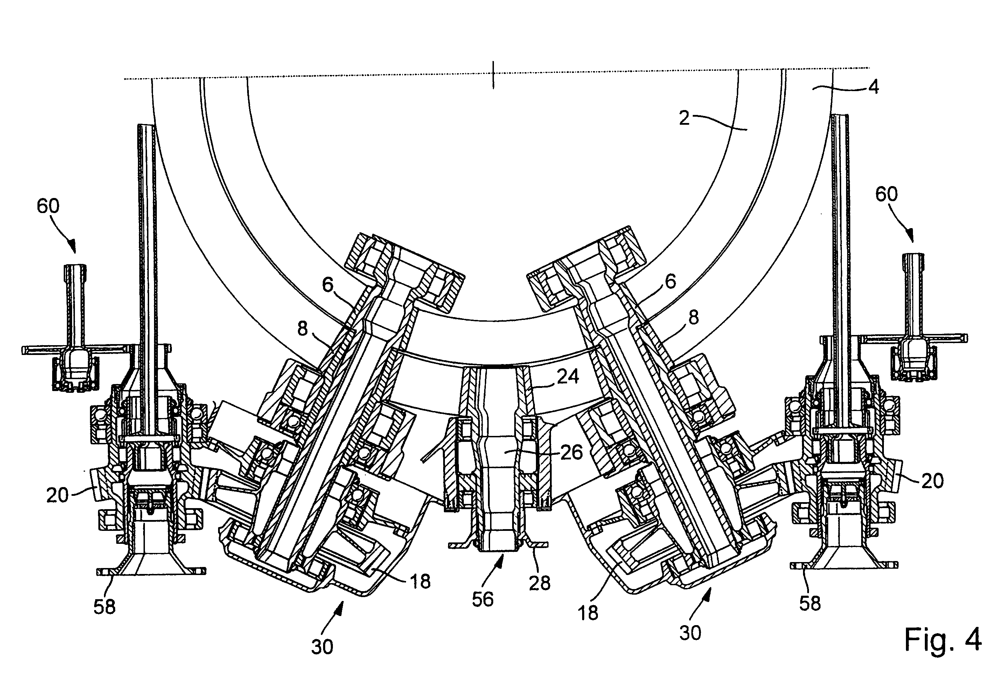

Schließlich zeigt Fig. 4 eine Darstellung eines erfindungsgemäßen Hubschrauber-Rotor-Hauptantriebs bei welchem zwei nicht dargestellte Antriebsmaschinen vorgesehen sind. Mit den beiden abtriebsseitigen Zahnrädern 2, 4 sind jeweils zwei Ritzel 6, 8 in gleichzeitigem Zahneingriff. Jedes der leistungsverzweigten Getriebe 30 weist einen Antriebsflansch 58 für die Anbindung einer nicht dargestellten Antriebsmaschine auf.

Der Nebenabtrieb 56, mit dem drehbar gelagertem Ritzel 24 einer Ritzelwelle 26 und einem Flansch 28, ist als separates Modul ausgebildet und dient zum Antrieb eines nicht dargestellten Heckrotors. In der dargestellten Ausführungsform schneiden die Drehachsen der Ritzel 6, 8, 24 jeweils die Drehachse der abtriebsseitigen Zahnräder 2, 4, welche gleich der Rotormastdrehachse ist. Je nach Einbauverhältnissen kann es wünschenswert sein, die Ritzelachsen parallel versetzt zur Darstellung anzuordnen. In diesem Fall sind die Ritzel 6, 8 bzw. die abtriebsseitigen Zahnräder 2, 4 mit einer Beveloid-Verzahnung zu versehen.

Die Nebenabtriebe 60 werden durch eine Stirnradstufe angetrieben und dienen zum Antrieb von Nebenaggregaten, wie beispielsweise Ölpumpen oder Generatoren.

Die dargestellten Ausführungsformen zeigen Getriebe mit zwei Leistungszweigen. Ohne weiteres ist es möglich mehr als zwei koaxiale Antriebsritzel und ebenso viele koaxiale abtriebsseitige Zahnräder vorzusehen, um die Antriebsleistung auf noch mehr Zahneingriffe zu verteilen.

Ein erfindungsgemäßes Getriebe weist gegenüber einem bekannten System ohne Leistungsverzweigung bei gleichem übertragbarem Moment einen um etwa 15 % kleineren Durchmesser auf, oder bei gleichem Durchmesser ein etwa 50 % höheres übertragbares Moment, wodurch insbesondere auch ein wesentlicher Gewichtsvorteil erzielt wird, was sich bei der Anwendung im Hubschrauber besonders vorteilhaft auswirkt. Der Fachmann wird jedoch auch andere Anwendungen für das vorgestellte leistungsverzweigte Getriebekonzept finden.

### Bezugszeichen

- 2: erstes abtriebsseitiges Zahnrad
- 4: zweites abtriebsseitiges Zahnrad
- 6: Antriebsritzel
- 8: Antriebsritzel
- 10: Ritzelwelle
- 12: Ritzelwelle
- 14: dünnwandiger, drehelastischer Abschnitt
- 16: Verzweigungspunkt
- 18: Kegelrad
- 20: Kegelrad
- 22: Antriebswelle
- 24: Nebenabtriebsritzel
- 26: Nebenabtriebswelle
- 28: Nebenabtriebsflansch
- 30: Getriebe, antriebsseitig
- 32: Zahnwellenverbindung
- 34: Zahnwellenverbindung
- 36: Einstellscheibe
- 38: Einstellscheibe
- 40: Gehäuse
- 42: Lagerlaufbahnen
- 44: Rotormast
- 46: Paßbolzen
- 48: Einstellscheibe
- 50: Einstellscheibe
- 52: Hauptrotorlager
- 54: Einstellscheibe
- 56: Nebenabtrieb
- 58: Antriebsflansch
- 60: Nebenabtrieb

## Patentansprüche

1. Getriebe (30) für einen Hubschrauber-Rotor-Antrieb mit einer oder mehreren Antriebsmaschinen, bei welchem für jede Antriebsmaschine mehrere Leistungszweige vorgesehen sind, wobei ein erster Leistungszweig ein erstes drehantreibbares Antriebsritzel (6) aufweist, welches in ständigem Zahneingriff mit einem ersten abtriebsseitigen Zahnrad (2) ist, und mindestens ein weiterer Leistungszweig ein zum ersten Antriebsritzel (6) koaxiales weiteres Antriebsritzel (8) aufweist, welches in ständigem Zahneingriff mit einem, zum ersten abtriebsseitigen Zahnrad (2) koaxialen abtriebsseitigen weiteren Zahnrad (4) ist, wobei zwischen einem antriebsseitigen Verzweigungspunkt (16) und den Antriebsritzeln (6, 8) zwei koaxiale Ritzelwellen (10, 12) angeordnet sind, dadurch **gekennzeichnet** daß die beiden abtriebsseitigen Zahnräder (2, 4) drehfest miteinander verbunden sind, daß die Ritzelwellen (10, 12) torsionsweich ausgebildet sind, und daß das Verhältnis der Torsionssteifigkeiten der Ritzelwellen (10, 12) in etwa dem Wälzradienverhältnis der zugeordneten Antriebsritzel (6, 8) entspricht.

2. Getriebe nach Anspruch 1, dadurch **gekennzeichnet**, daß mindestens eine Ritzelwelle (12) einen dünnwandigen Hohlwellenabschnitt (14) aufweist, um die gewünschte Drehelastizität zu erzeugen.

3. Getriebe nach Anspruch 1 oder 2, dadurch **gekennzeichnet**, daß die Ritzelwellen 10, 12 aus verschiedenen Werkstoffen bestehen, die sich im Schubmodul unterscheiden, um die gewünschte Drehelastizität zu erzeugen.

4. Getriebe nach einem der Ansprüche 1 bis 3, dadurch **gekennzeichnet**, daß das Antriebsritzel (8) der radial äußeren Ritzelwelle (12) auf der radial inneren Ritzelwelle (10) verdrehbar gelagert ist.

5. Getriebe nach Anspruch 4, dadurch **gekennzeichnet**, daß die Lagerung des Antriebsritzels (8) der radial äußeren Ritzelwelle (12) auf der radial inneren Ritzelwelle (10) als Gleitlager ausgebildet ist, wobei die Lagerlaufbahnen (42) radial innerhalb des Antriebsritzels (8) und in der Ritzelwelle (10) eingearbeitet sind.

6. Getriebe nach einem der Ansprüche 1 bis 5, dadurch **gekennzeichnet**, daß am Verzweigungspunkt (16) der Leistungszweige ein vorzugsweise als Zahnwellenprofil ausgebildetes Formschlußprofil (32) zur drehfesten und drehspielfreien Verbindung der Ritzelwellen (10, 12) vorgesehen ist.

7. Getriebe nach einem der Ansprüche 1 bis 6, dadurch **gekennzeichnet**, daß die relative Drehstellungen der Ritzelwellen (10, 12) mindestens einmalig einstellbar ist.

8. Getriebe nach einem der Ansprüche 1 bis 7, dadurch **gekennzeichnet**, daß mindestens eines der Antriebsritzel (6, 8) mit der zugehörigen Ritzelwelle (10, 12) einstückig ausgebildet ist.

9. Getriebe nach einem der Ansprüche 1 bis 8, dadurch **gekennzeichnet**, daß die abtriebsseitigen Zahnräder (2, 4) als zylindrische Stirnräder ausgebildet sind.

10. Getriebe nach einem der Ansprüche 1 bis 9, dadurch **gekennzeichnet**, daß die abtriebsseitigen Zahnräder (2, 4) als Kegelräder ausgebildet sind.

11. Getriebe nach einem der Ansprüche 1 bis 10, dadurch **gekennzeichnet**, daß die abtriebsseitigen Zahnräder (2, 4) als Kronräder ausgebildet sind.

12. Getriebe nach einem der Ansprüche 9 bis 11, dadurch **gekennzeichnet**, daß die Antriebsritzel (6, 8) als zylindrische Stirnräder ausgebildet sind.

13. Getriebe nach einem der Ansprüche 9 bis 11, dadurch **gekennzeichnet**, daß die Antriebsritzel (6, 8) als Kegelräder ausgebildet sind.

14. Getriebe nach einem der Ansprüche 11 bis 13, dadurch **gekennzeichnet**, daß die Antriebsritzel (6, 8) und die abtriebsseitigen Zahnräder (2, 4) Hypoidradpaare bilden.

15. Getriebe nach einem der Ansprüche 1 bis 14, dadurch **gekennzeichnet**, daß das Radpaar (2, 6; 4, 8) mindestens eines Leistungszweiges schrägverzahnt ist.

16. Getriebe nach einem der Ansprüche 11 bis 15, dadurch **gekennzeichnet**, daß das Radpaar (2, 6; 4, 8) mindestens eines Leistungszweiges spiralverzahnt ist.

17. Getriebe nach Anspruch 15 oder 16, dadurch **gekennzeichnet**, daß die Schrägungswinkel bzw. Spiralverzahnungen der Radpaare der Leistungszweige (2, 6; 4, 8) entgegengesetzten Richtungssinn aufweisen.

18. Getriebe nach Anspruch 15 oder 16, dadurch **gekennzeichnet**, daß die Schrägungswinkel bzw. Spiralverzahnungen der Radpaare der Leistungszweige (2, 6; 4, 8) gleichen Richtungssinn aufweisen.

19. Getriebe nach einem der Ansprüche 1 bis 18, dadurch **gekennzeichnet**, daß die axiale Position der Antriebsritzel (6, 8) entlang ihrer Drehachse einstellbar ist.

20. Getriebe nach einem der Ansprüche 1 bis 19, dadurch **gekennzeichnet**, daß die Antriebsritzel (6, 8) und die abtriebsseitigen Zahnräder (2, 4) der Leistungszweige jeweils gleiche Zähnezahlen aufweisen und daß das Verhältnis der Moduln in etwa dem Wälzradienverhältnis entspricht.

21. Getriebe nach einem der Ansprüche 1 bis 20, dadurch **gekennzeichnet**, daß antriebsseitig eine Vorübersetzungsstufe (18, 20) vorgesehen ist.

22. Getriebe nach einem der vorherigen Ansprüche, dadurch **gekennzeichnet**, daß ein Ritzel (24) eines Nebenabtriebs (56) für den Heckrotorantrieb mit einem der abtriebsseitigen Zahnräder (4) in ständigem Zahneingriff ist.

## Claims

1. Transmission (30) for a helicopter rotor drive comprising one or more prime movers, in which a plurality of power transmission branches are provided for each prime mover, wherein a first power transmission branch comprises a first driving pinion (6), which can be driven in rotation and is in constant tooth mesh with a first gear wheel (2) on the output side, and at least one further power transmission branch comprises a further driving pinion (8), which is in constant tooth mesh with a further gear wheel (4) on the output side and is coaxial with the first gear wheel (2) on the output side, wherein two coaxial pinion shafts (10, 12) are disposed between a branch point (16) on the input side and the driving pinions (6, 8), characterised in that the two gear wheels (2, 4) on the output side are non-rotatably connected together, that the pinion shafts (10, 12) are torsionally weak, and that the ratio of the torsional stiffnesses of the pinion shafts (10, 12) corresponds approximately to the pitch radius ratio of the associated driving pinions (6, 8).

2. Transmission according to Claim 1, characterised in that at least one pinion shaft (12) comprises a thin-walled hollow shaft section (14) in order to produce the desired torsional elasticity.

3. Transmission according to Claim 1 or 2, characterised in that the pinion shafts (10, 12) consist of different materials which vary in shear modulus in order to produce the desired torsional elasticity.

4. Transmission according to any one of Claims 1 to 3, characterised in that the driving pinion (8) of the radially outer pinion shaft (12) is rotatably mounted on the radially inner pinion shaft (10).

5. Transmission according to Claim 4, characterised in that the mounting of the driving pinion (8) of the radially outer pinion shaft (12) on the radially inner pinion shaft (10) is formed as a sliding bearing, wherein the bearing races (42) are incorporated radially within the driving pinion (8) and in the pinion shaft (10).

6. Transmission according to any one of Claims 1 to 5, characterised in that a positively engaging profile (32), which is preferably formed as an external spline, is provided at the branch point (16) of the power transmission branches to connect the pinion shafts (10, 12) in a non-rotatable manner and so as to be free from rotational play.

7. Transmission according to any one of Claims 1 to 6, characterised in that the relative rotational positions of the pinion shafts (10, 12) can be adjusted at least once.

8. Transmission according to any one of Claims 1 to 7, characterised in that at least one of the driving pinions (6, 8) is formed in one piece with the associated pinion shaft (10, 12).

9. Transmission according to any one of Claims 1 to 8, characterised in that the gear wheels (2, 4) on the output side are formed as cylindrical spur gears.

10. Transmission according to any one of Claims 1 to 9, characterised in that the gear wheels (2, 4) on the output side are formed as bevel gears.

11. Transmission according to any one of Claims 1 to 10, characterised in that the gear wheels (2, 4) on the output side are formed as crown gears.

12. Transmission according to any one of Claims 9 to 11, characterised in that the driving pinions (6, 8) are formed as cylindrical spur gears.

13. Transmission according to any one of Claims 9 to 11, characterised in that the driving pinions (6, 8) are formed as bevel gears.

14. Transmission according to any one of Claims 11 to 13, characterised in that the driving pinions (6, 8) and the gear wheels (2, 4) on the output side form hypoid gear pairs.

15. Transmission according to any one of Claims 1 to 14, characterised in that the gear pair (2, 6; 4, 8) of at least one power transmission branch is helically toothed.

16. Transmission according to any one of Claims 11 to 15, characterised in that the gear pair (2, 6; 4, 8) of at least one power transmission branch is spiral-toothed.

17. Transmission according to Claim 15 or 16, characterised in that the helix angles or spiral teeth of the gear pairs of the power transmission branches (2, 6; 4, 8) extend in opposite directions.

18. Transmission according to Claim 15 or 16, characterised in that the helix angles or spiral teeth of the gear pairs of the power transmission branches (2, 6; 4, 8) extend in the same direction.

19. Transmission according to any one of Claims 1 to 18, characterised in that the axial position of the driving pinions (6, 8) can be adjusted along their axis of rotation.

20. Transmission according to any one of Claims 1 to 19, characterised in that the driving pinions (6, 8) and the gear wheels (2, 4), on the output side, of the power transmission branches in each case have equal numbers of teeth, and that the ratio of the modules corresponds approximately to the pitch radius ratio.

21. Transmission according to any one of Claims 1 to 20, characterised in that a transition stage (18, 20) is provided on the input side.

22. Transmission according to any one of the preceding Claims, characterised in that a pinion (24) of a power take-off (56) for the tail rotor drive is in constant tooth mesh with one of the gear wheels (4) on the output side.

## Revendications

1. Transmission (30) pour un entraînement de rotor d'hélicoptère comprenant un ou plusieurs moteurs d'entraînement, dans laquelle il est prévu plusieurs branches de puissance pour chaque moteur d'entraînement, une première branche de puissance comprenant un premier pignon d'entrée (6) pouvant être entraîné en rotation, qui est en prise constante avec une première roue dentée côté sortie (2) et où au moins une autre branche de puissance comprend un autre pignon d'entrée (8) coaxial au premier pignon d'entrée (6), qui est en prise constante avec une autre roue dentée (4), côté sortie, coaxiale à la première roue dentée côté sortie (2), dans laquelle deux arbres de pignons coaxiaux (10, 12) sont agencés entre un point de bifurcation (16) côté entrée et les pignons d'entrée (6, 8), **caractérisée** en ce que les deux roues dentées côté sortie (2, 4) sont reliées solidairement entre elles en rotation, en ce que les arbres de pignons (10, 12) sont souples en torsion, et en ce que le rapport des raideurs en torsion des arbres de pignons (10, 12) correspond à peu prés au rapport des rayons de roulement des pignons d'entrée (6, 8) qui leur sont associés.

2. Transmission selon la revendication 1, **caractérisée** en ce que au moins un arbre de pignons (12) présente un segment d'arbre creux (14) à paroi mince pour créer l'élasticité de torsion souhaitée.

3. Transmission selon la revendication 1 ou 2, **caractérisée** en ce que les arbres de pignons (10, 12) sont composés de matériaux différents qui diffèrent par leur module de cisaillement pour créer l'élasticité de torsion souhaitée.

4. Transmission selon l'une des revendications 1 à 3, **caractérisée** en ce que le pignon d'entrée (8) de l'arbre de pignons (12) radial extérieur est monté rotatif sur l'arbre de pignons (10) radial intérieur.

5. Transmission selon la revendication 4, **caractérisée** en ce que le montage rotatif du pignon d'entrée (8) de l'arbre de pignons (12) radial extérieur sur l'arbre de pignons (10) radial intérieur est constitué par un palier lisse, les pistes de portée (42) étant usinées dans une position radial intérieure par rapport au pignon d'entrée (8) et dans l'arbre de pignons (10).

6. Transmission selon l'une des revendications 1 à 5, **caractérisée** en ce qu'au point de bifurcation (16) des branches de puissance, est prévu un profil (32) à liaison par complémentarité de forme, constitué par un profil d'arbre cannelé, pour la liaison solidaire en rotation et exempte de jeu de rotation entre les arbres de pignons (10, 12).

7. Transmission selon l'une des revendications 1 à 6, **caractérisée** en ce que la relation de position angulaire entre les arbres de pignons (10, 12) est réglable au moins une fois.

8. Transmission selon l'une des revendications 1 à 7, **caractérisée** en ce que au moins un des pignons d'entrée (6, 8) est d'une seule pièce avec l'arbre de pignons (10, 12) correspondant.

9. Transmission selon l'une des revendications 1 à 8, **caractérisée** en ce que les roues dentées côté sortie (2, 4) sont constituées par des roues droites cylindriques.

10. Transmission selon l'une des revendications 1 à 9, **caractérisée** en ce que les roues dentées côté sortie (2, 4) sont constituées par des roues coniques.

11. Transmission selon l'une des revendications 1 à 10, **caractérisée** en ce que les roues dentées côté sortie (2, 4) sont constituées par des couronnes à denture de chant.

12. Transmission selon l'une des revendications 9 à 11, **caractérisée** en ce que les pignons d'entrée (6, 8) sont constitués par des roues droites cylindriques.

13. Transmission selon l'une des revendications 9 à 11, **caractérisée** en ce que les pignons d'entrée (6, 8) sont constitués par des roues coniques.

14. Transmission selon l'une des revendications 11 à 13, **caractérisée** en ce que les pignons d'entrée (6, 8) et les roues dentées côté sortie (2, 4) forment des couples de roues hypoïdes.

15. Transmission selon l'une des revendications 1 à 14, **caractérisée** en ce que le couple de roues (2, 6; 4, 8) d'au moins une branche de puissance est à denture hélicoïdale.

16. Transmission selon l'une des revendications 11 à 15, **caractérisée** en ce que le couple de roues (2, 6; 4, 8) d'au moins une branche de puissance est à denture spirale.

17. Transmission selon la revendication 15 ou 16, **caractérisée** en ce que les angles d'hélice ou les dentures spirales des couples de roues des branches de puissance (2, 6; 4, 8) présentent des sens opposés.

18. Transmission selon la revendication 15 ou 16, **caractérisée** en ce que les angles d'hélice ou les dentures spirales des couples de roues des branches de puissance (2, 6; 4, 8) présentent le même sens.

19. Transmission selon l'une des revendications 1 à 18, **caractérisée** en ce que la position axiale des pignons d'entrée (6, 8) le long de leur axe de rotation est réglable.

20. Transmission selon l'une des revendications 1 à 19, **caractérisée** en ce que les pignons d'entrée (6, 8) et les roues dentées côté sortie (2, 4) des branches de puissance comportent respectivement les mêmes nombres de dents, et en ce que le rapport des modules correspond à peu prés au rapport des rayons de roulement.

21. Transmission selon l'une des revendications 1 à 20, **caractérisée** en ce qu'il est prévu un pré-étage de rapport de transmission (18, 20) sur le côté entrée.

22. Transmission selon l'une des revendications précédentes, **caractérisée** en ce qu'un pignon (24) d'une prise de force auxiliaire (56) pour l'entraînement du rotor arrière est en prise constante avec les roues dentées côté sortie.
